(19) Europäisches Patentamt
European Patent Office
Office européen des brevets

(11) **EP 3 525 334 A1**

(12) **EUROPEAN PATENT APPLICATION**

(43) Date of publication:
14.08.2019 Bulletin 2019/33

(51) Int Cl.:
*H02M 7/217* (2006.01)    *G05F 1/56* (2006.01)

(21) Application number: 19156462.4

(22) Date of filing: 11.02.2019

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 09.02.2018 US 201862628725 P

(71) Applicant: **Goodrich Corporation**
**Charlotte, NC 28217-4578 (US)**

(72) Inventor: **HARR, A. John**
**Minerva, OH 44657 (US)**

(74) Representative: **Dehns**
**St. Bride's House**
**10 Salisbury Square**
**London EC4Y 8JD (GB)**

(54) **AC TO DC POWER SUPPLY**

(57)    An AC to DC power supply includes a first node (21), a second node (25), a switch (22), a switch control circuit (24), and a capacitive circuit (26). The switch is electrically coupled between the first node and the second node. The switch is configured to receive AC power at the first node. a switch control circuit electrically coupled to the first node and the switch. The switch control circuit is configured to open and close the switch based upon a voltage of the AC power at the first node. The capacitive circuit is electrically coupled to the second node. The capacitive circuit is configured to store energy when the switch is closed and provide DC power when the switch is open.

FIG. 1

**Description**

BACKGROUND

Standard high voltage AC to low voltage DC power supplies use a rectifier circuit to develop a DC voltage from an AC source and a high voltage to low voltage regulator to step down the high voltage DC to low voltage DC. These designs have poor energy efficiency and can result in significant heat/ power dissipation due to the need for a current limiting resistive element used to drop a large root mean square (RMS) voltage. Alternatively, transformers may be used to step down the high voltage AC to low voltage AC, which is then rectified to generate a low voltage DC voltage. Transformers can be very expensive, large, and are typically designed for use in narrow frequency applications. Using transformers in applications where the frequency extends beyond the bounds their designed frequency leads to a loss in efficiency and performance. Furthermore, the output voltage of a transformer is not fixed and varies proportionally to the input voltage, which must be accounted for by designing for a sufficient output voltage at minimum input voltage conditions. In some applications, such as Aircraft AC voltages for example, voltages can vary from 97-134V. Varying voltages require the voltage in excess of the minimum input voltage conditions to be trimmed by a final regulator. Trimming by a final regulator generates heat and causes a loss in overall efficiency.

SUMMARY

In one example, an AC to DC power supply includes a first node, a second node, a switch, a switch control circuit, and a capacitive circuit. The switch is electrically coupled between the first node and the second node. The switch is configured to receive AC power at the first node. a switch control circuit electrically coupled to the first node and the switch. The switch control circuit is configured to open and close the switch based upon a voltage of the AC power at the first node. The capacitive circuit is electrically coupled to the second node. The capacitive circuit is configured to store energy when the switch is closed and provide DC power when the switch is open.

In one example, an AC to DC power system comprises an AC power source, an AC to DC power supply, and a load. The AC power source is configured to provide AC power. The AC to DC power supply is electrically coupled to the AC power source. The AC to DC power supply is configured to receive the AC power. The AC to DC power supply comprises a first node, a second node, a switch, a switch control circuit, and a capacitive circuit. The switch is electrically coupled between the first node and the second node. The switch is configured to receive the AC power at the first node. The switch control circuit is electrically coupled to the first node and the switch. The switch control circuit is configured to open and close the switch based upon a voltage of the AC power at the first node. The capacitive circuit is electrically coupled to the second node. The capacitive circuit is configured to store energy when the switch is closed and provide DC power when the switch is open. The load is electrically coupled to the second node. The load is configured to receive the DC power provided by the AC to DC power supply.

In one example, a method comprises receiving AC power, at a switch from an AC power source; monitoring a voltage of a node connected to a first terminal of the switch receiving the AC power using a switch control circuit; closing the switch for a time period in response to the voltage reaching a threshold voltage using the switch control circuit; charging a capacitive circuit connected to a second terminal of the switch in response to the switch closing for the time period; opening the switch in response to the time period elapsing using the switch control circuit; and providing power from the capacitor in response to the switch opening.

BRIEF DESCRIPTION OF THE DRAWINGS

FIG. 1 is a block diagram of a first example of an AC to DC power system.
FIG. 2 is a graph depicting an AC voltage and a capacitive circuit voltage of the first example AC to DC power system.
FIG. 3 is a block diagram of a second example of an AC to DC power system.
FIG. 4 is a graph depicting an AC voltage and a capacitive circuit voltage of the second example AC to DC power system.
FIG. 5 is a block diagram of a third example of an AC to DC power system.
FIG. 6 is a block diagram of a fourth example of an AC to DC power system.
FIG. 7 is a graph depicting an AC voltage and a capacitive circuit voltage of the fourth example AC to DC power system.
FIG. 8 is a flow diagram depicting a process for converting AC power to DC power using a high efficiency AC to DC reducing regulator (HARR) charger power supply.

DETAILED DESCRIPTION

Apparatus, systems, and associated methods relate to AC to DC power conversion provided by a HARR charger power supply. Using the apparatus, systems, and associated methods herein, allows for AC to DC power conversion across a range of frequencies with a single device without incurring the loss of efficiency and performance of traditional power converters. Additionally, a single device can be used across a range of voltages without generating heat and impacting efficiency that occurs when trimming voltage for a traditional power converter.

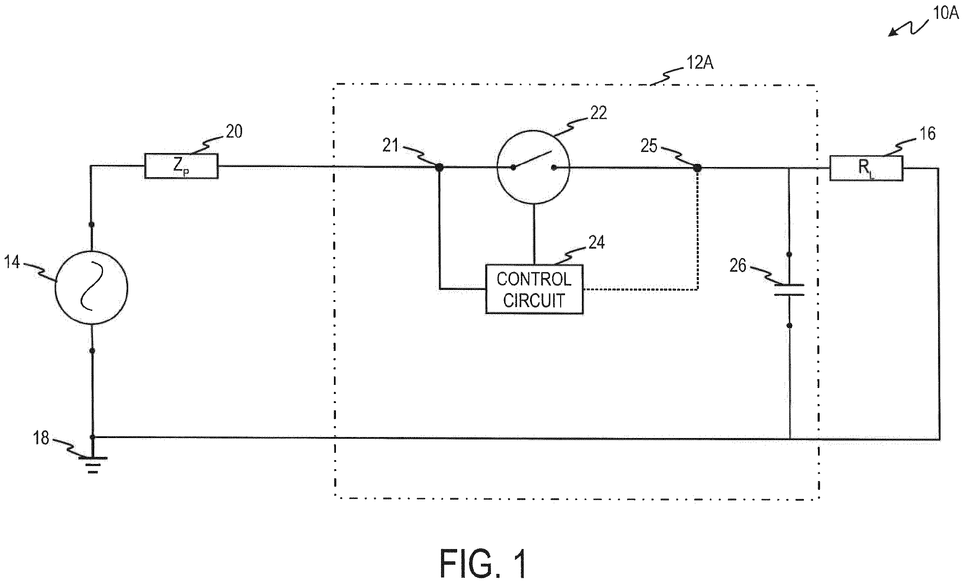

FIG. 1 is a block diagram of AC to DC power system 10A including HARR charger power supply 12A, AC power source 14, DC load ($R_L$) 16, ground 18, and line impedance (Zp) 20. HARR charger power supply 12A includes node 21, switch 22, switching control circuit 24, node 25, and capacitive circuit 26.

HARR charger power supply 12A is electrically coupled between AC power source 14 and DC load 16. Line impedance 20 represents the parasitic line impedance of AC power source 14 wiring and does not represent an inductive or capacitive device. Switch 22 is electrically coupled between node 21 and node 25. Switch 22 can be a relay, a transistor, or other type of controllable switch. Node 21 is located on the AC side of switch 22. The AC voltage at node 21 is the AC voltage seen by the AC side of switch 22 and control circuit 24. Node 25 is located on the DC side of switch 22. Capacitive circuit 26 is electrically coupled in parallel with DC load 16. Capacitive circuit 26 can be a capacitor, multiple capacitors, or an arrangement of electrical components that behave similar to a capacitor. The DC voltage at node 25 is the voltage seen by capacitive circuit 26 and DC load 16. Switching control circuit 24 is electrically coupled to switch 22. In one example, switching control circuit 24 is included in switch 22.

HARR charger power supply 12A receives AC power from AC power source 14 and conditions that power for DC load 16. AC power source 14 can be an AC generator, a utility power grid, or other devices and/or systems that provide AC power. DC load 16 is any device or system that utilizes DC power. HARR charger power supply 12 is configured to close switch 22 for a time period in response to the AC voltage at node 21 reaching a threshold voltage. The AC voltage at node 21 is monitored by switching control circuit 24. Switching control circuit 24 provides a control signal to close switch 22 for the time period in response to the AC voltage at node 21 reaching the threshold voltage. While switch 22 is closed, capacitive circuit 26 is charged by AC power source 14 via switch 22. Capacitive circuit 26 provides power to DC load 16. DC load 16 ($R_L$) is the end use circuit load modeled as a simple resistive load element, and $R_L$ is much greater than Zp such that the amount of ripple voltage on the DC side of switch 22 is minimized to a level acceptable by the end use circuitry. Since power dissipation is given by the equation:

$$P = \frac{V^2}{R} \qquad\qquad \text{(Equation 1)}$$

and $R_L$ is the only resistive element in the circuit and V is at or only slightly above that required by the final end use circuit, power dissipation is primarily limited to that of the end use circuit and not the power supply circuit achieving high power conversion efficiency.

The peak to peak ripple voltage (Ve) of capacitive circuit 26 can be calculated based upon the capacitance (C) of capacitive circuit 26, the charged initial voltage ($V_i$) of capacitive circuit 26, and the powering a circuit load current ($I_L$). When capacitive circuit 26 is charged once per cycle with a line frequency (f) the peak to peak ripple voltage at node 25 is given by the equation:

$$V_e = V_i - \frac{I_L}{f \times C} \qquad\qquad \text{(Equation 2)}$$

Using this equation, capacitive circuit 26 and the switching behavior of switch 22 can be chosen based at least in part upon the ripple voltage needs of a given system.

In some examples, control circuit 24 is electrically coupled to node 25. When control circuit 24 is electrically coupled to node 25, control circuit monitors the voltage at node 25. The voltage at node 25 is the DC output voltage. Control circuit 24 can adjust the threshold voltage used to determine when to close switch 22 to account for situations where DC load 16 varies over time.

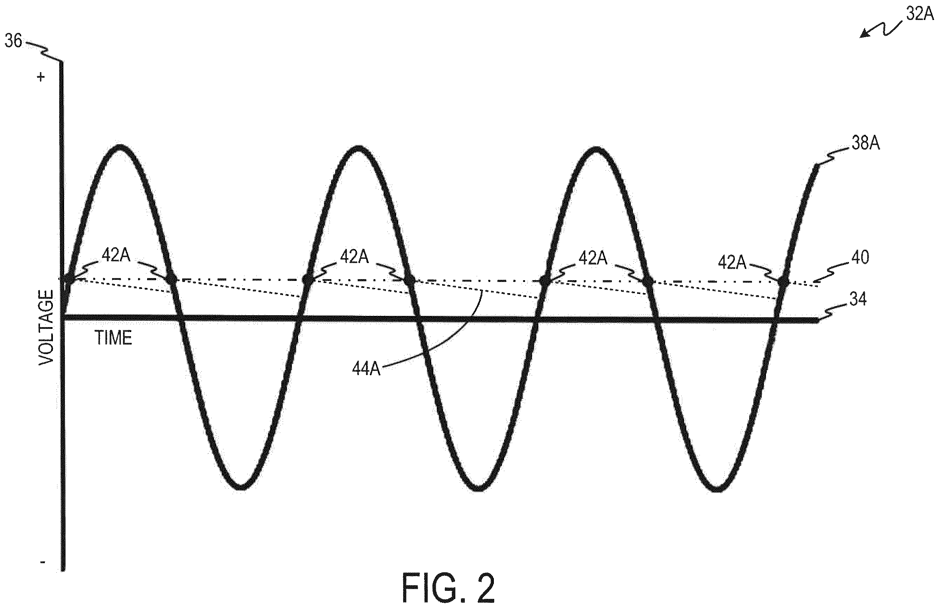

FIG. 2 illustrates graph 32A including x-axis 34, y-axis 36, AC voltage waveform 38A, threshold voltage 40, points 42A, and capacitive voltage waveform 44A. For purposes of clarity and ease of discussion graph 32A is described below within the context of AC to DC power system 10A of FIG. 1.

Y-axis 36 indicates voltage amplitude in both the positive and negative direction. X-axis 34 indicates time. AC voltage waveform 38A depicts the voltage at node 21 over time. Threshold voltage 40 indicates the voltage at which switch control circuit is configured to close switch 22 for a time period. Points 42A indicate when switch 22 is closed.

Capacitive voltage waveform 44A indicates the voltage at node 25 over time.

As indicated above in Equation 2, for a given frequency, the amount of voltage ripple is directly related to the capacitance of capacitive circuit 26 and the end circuit load current. Component and circuit selection can bring the amount of ripple voltage within a level acceptable for use DC load 16. In some examples, current limits of AC source 14 and/or parasitic losses from AC line wiring, such as line impedance 20, switch 22, and/or equivalent series resistance (ESR) of capacitive circuit 26 may prevent capacitive circuit 26 from fully charging long enough to keep the ripple voltage within acceptable limits for DC load 16. A smaller capacitance of capacitive circuit 26 may be used, and threshold voltage 40 increased to maintain an output, shown by capacitive voltage waveform 44A, above that required for end circuit use. In this example, a linear regulator can be used to condition the power supply voltage and HARR charger power supply 12A is designed so that its minimum output voltage equals the minimum regulator input voltage under full load condition in order to maximize the efficiency benefits.

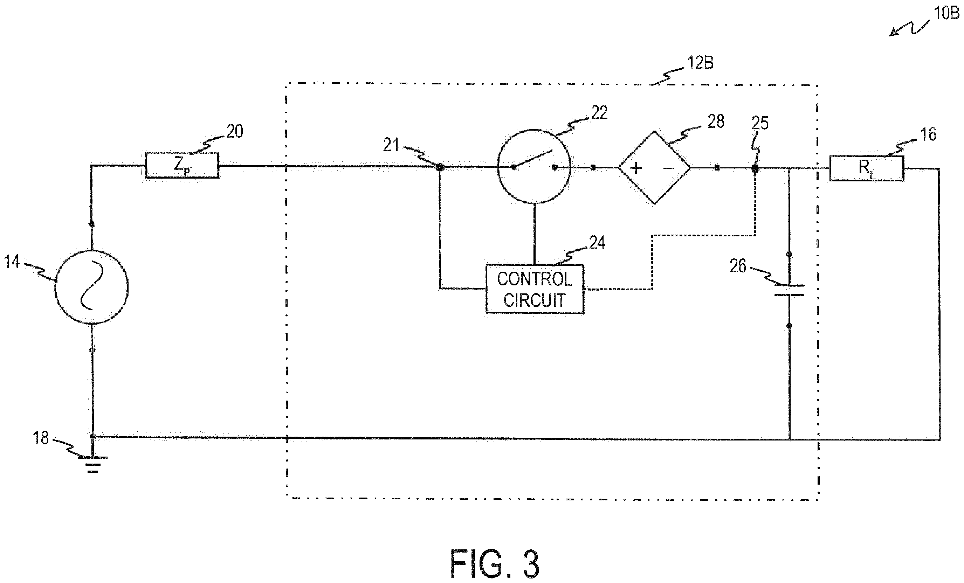

FIG. 3 is a block diagram of AC to DC power system 10B including HARR charger power supply 12B, AC power source 14, DC load ($R_L$) 16, ground 18, and line impedance 20. HARR charger power supply 12B includes switch 22, switching control circuit 24, capacitive circuit 26, and rectifier circuit 28.

In some examples, source inductance can cause flyback voltages when switch 22 opens. To prevent current flow away from DC load 16, HARR charger power supply 12B includes rectifier circuit 28. Rectifier circuit 28 allows capacitive circuit 26 to be charged at or above a target DC supply voltage on the falling edge of the positive AC power waveform and remain on until the charge current naturally commutates to zero. Rectifier circuit 28 can comprise a diode or other rectifying circuitry. This allows for inductive energy in AC to DC power system 10B to flow into the storage capacitor until the current flow becomes zero. When the current flow becomes zero, rectifier circuit 28 prevents reverse flow back onto the AC line, and switch 22 is opened in a zero-current condition. Opening switch 22 in a zero-current condition eliminates electromagnetic interference (EMI) caused by switch turn off.

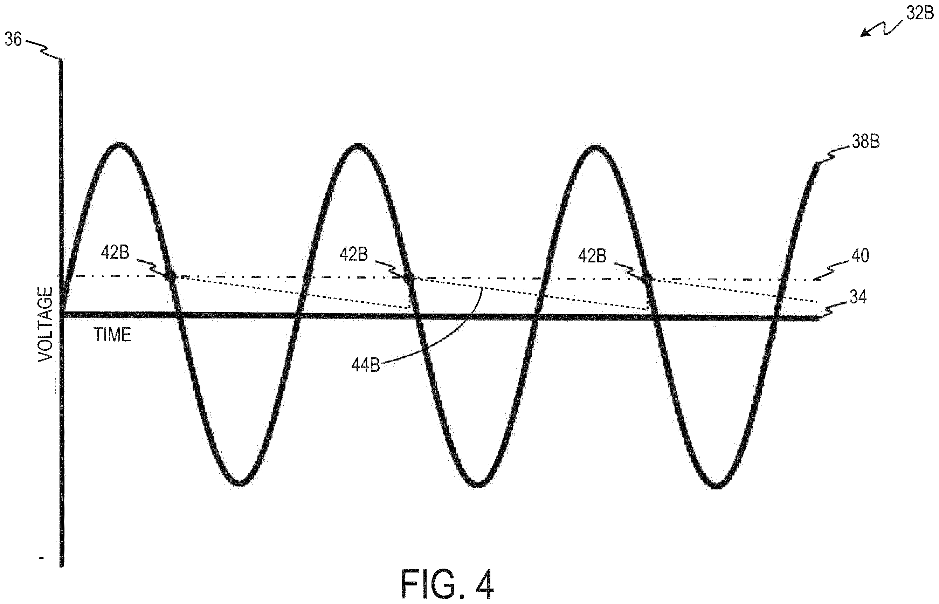

FIG. 4 illustrates graph 32B including x-axis 34, y-axis 36, AC voltage waveform 38B, threshold voltage 40, points 42B, and capacitive voltage waveform 44B. For purposes of clarity and ease of discussion, graph 32B is described below within the context of AC to DC power system 10B of FIG. 3.

As shown by points 42B, switch 22 is closed upon reaching threshold voltage 40 on a falling edge of AC voltage waveform 38B. Switch 22 remains open until AC waveform 38B reaches zero volts. This allows for inductive energy in AC to DC power system 10B to flow into the storage capacitor until the current flow becomes zero. This decreases the number of charges per cycle as shown by points 42B. This also increases the discharge time between charges as shown by capacitive voltage waveform 44B.

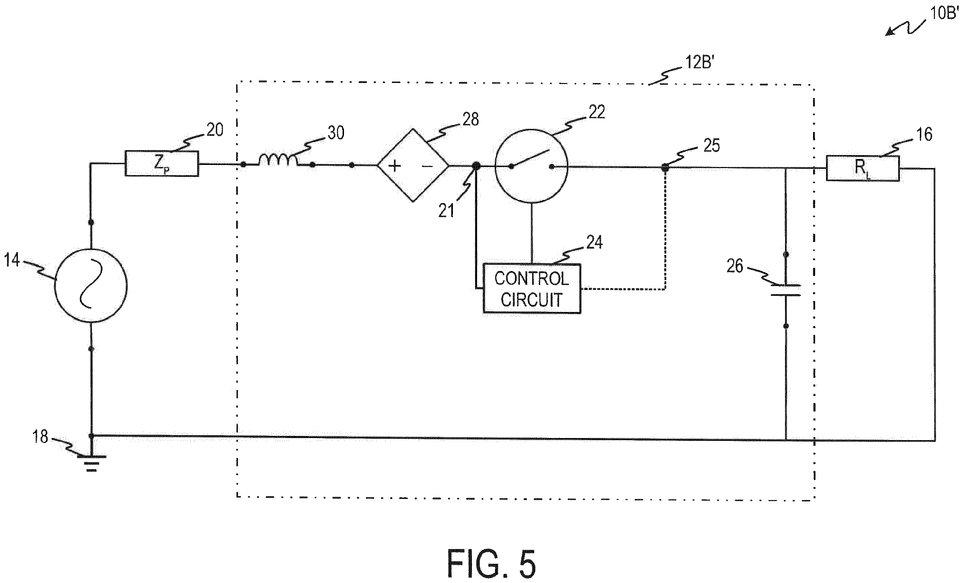

FIG. 5 is a block diagram of AC to DC power system 10B' including HARR charger power supply 12B', AC power source 14, DC load ($R_L$) 16, ground 18, and line impedance 20. HARR charger power supply 12B' includes switch 22, switching control circuit 24, capacitive circuit 26, rectifying circuit 28, and inductive circuit 30.

HARR charger power supply 12B' includes inductive circuit 30 to address limitations of AC power source 14 and/or to lower RMS charge currents. Including inductive circuit 30 diminishes power dissipation in the circuit from parasitic resistive elements such as wiring resistance, switch resistance, capacitor ESR, or even power dissipation from rectifier circuit 28. In one example, the added inductance (L) from inductive circuit 30, limits inrush current ($D_i/D_t$) of the current to a value of $V_{ind}/L$. This gives the equation:

$$\frac{D_i}{D_t} = \frac{V_{ind}}{L} \qquad\qquad \text{(Equation 3)}$$

In this example, the inrush current exists such that line impedance 20 is zero, and the voltage across capacitive circuit 26 is zero. The inrush current will be equal to the threshold voltage at which switch 22 is closed divided by the inductance of inductive circuit 30. Adding inductance to the circuit to limit the inrush current lowers the RMS charge current as it limits the peak inrush and delivers charge to capacitive circuit 26 over a longer period of time as inductive circuit 30's stored energy is delivered to the capacitor at the end of the charging cycle.

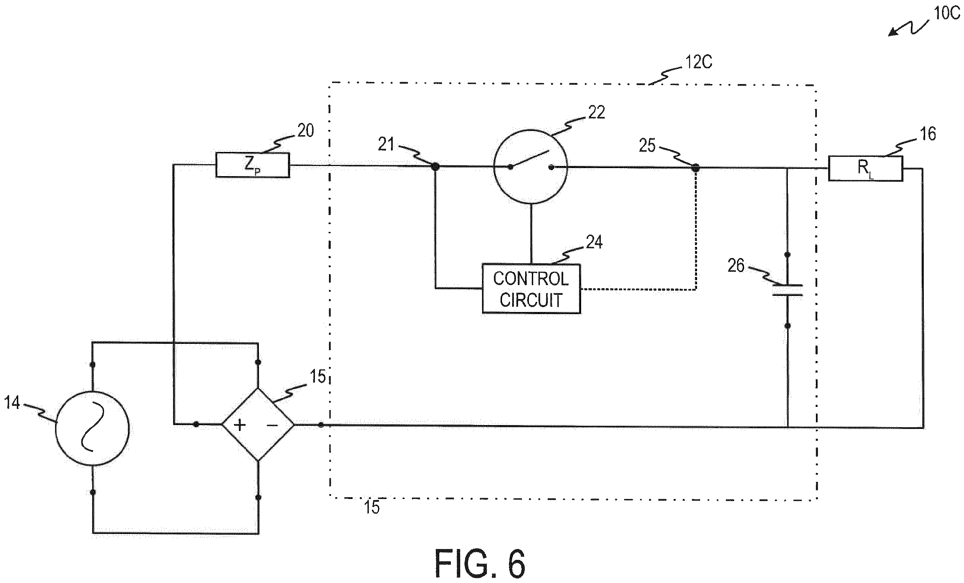

FIG. 6 is a block diagram of AC to DC power system 10C including HARR charger power supply 12C, AC power source 14, DC load ($R_L$) 16, ground 18, and line impedance 20. HARR charger power supply 12C includes switch 22, switching control circuit 24, capacitive circuit 26, rectifying circuit 28, and inductive circuit 30.

In an embodiment, rectifier circuit 15 is a full rectifier. Power provided by AC power source 14 is fully rectified before being provided to HARR charger power supply 12C. Fully rectifying the power provided by AC power source 14, allows control circuit 24 to close switch 22 twice more per cycle. Closing switch 22 twice more per cycle allows capacitive circuit 26 to charge more often and shortens the duration of each discharge. This allows the ripple current provided to DC load 16 to be decreased.

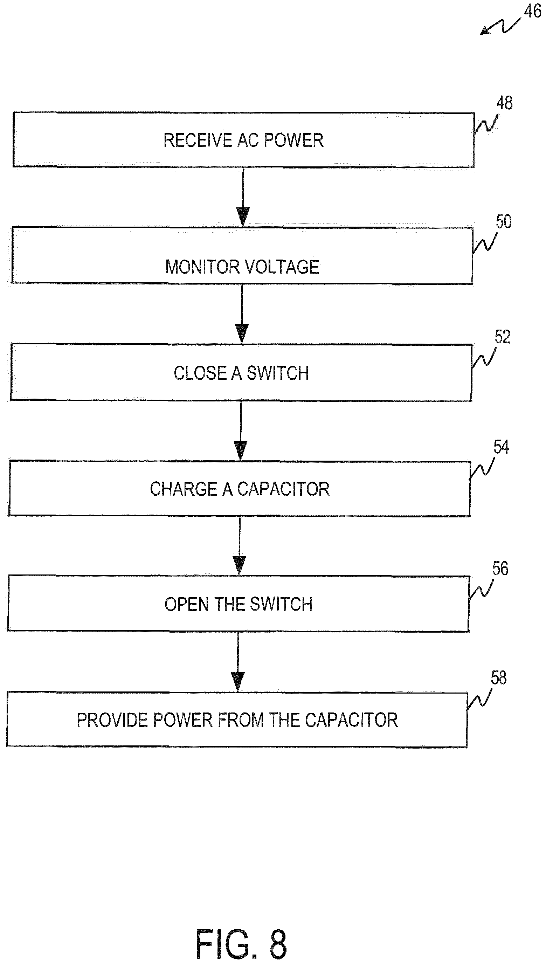

FIG. 8 illustrates graph 32C including x-axis 34, y-axis 36, AC voltage waveform 38C, threshold voltage 40, points 42C, and capacitive voltage waveform 44C. For purposes of clarity and ease of discussion graph 32C is described below within the context of AC to DC power system 10C of FIG. 6.

AC voltage waveform 38C depicts the voltage at node 21 over time. In this example, AC voltage waveform 38C is fully rectified by rectifier circuit 15. This increases the number of charges per cycle as can be seen with the number of points 42C and capacitive voltage waveform 44C. Increasing the number of charges per cycle increases the frequency of capacitive circuit 26 being charged and decreases the discharge time between charges. The increased charge frequency and decreased discharge time results in a higher voltage minimum voltage on capacitive circuit 26 than when AC voltage waveform 38C is not fully rectified. Thus, by fully rectifying AC voltage waveform 38C, the ripple current is reduced.

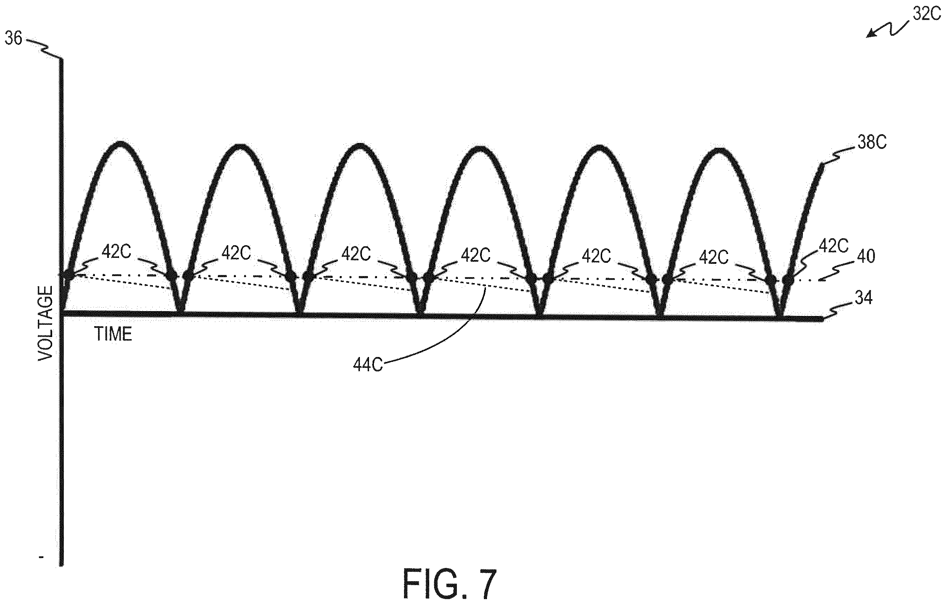

FIG. 7 is a flow diagram depicting process 46 for converting AC power to DC power using a HARR charger power supply. For purposes of clarity and ease of discussion process 46 is described below within the context of AC to DC power system 10A of FIG. 1.

At step 48, AC to DC power supply receives AC power from AC power source 14. At step 50, the voltage of the AC power is monitored by switch control circuit 24 at node 21. At step 52, switch 22 is closed for a time period by switch control circuit 24 in response to the voltage reaching a threshold voltage. At step 54, capacitive circuit 26 is charged in response to switch 22 being closed. At step 56, switch 22 is opened by switch control circuit 24 in response to the time period elapsing. At step 58, power is provided by capacitive circuit 26 in response to switch 22 closing. In one example, switch 22 is closed at step 52 in response to the voltage reaching the threshold voltage on a falling edge, as shown. In this example, switch 22 is opened in response to the voltage at node 21 reaching zero volts at step 56. This example uses rectifier circuit 28 of FIG. 3 or 5 to prevent flyback voltage. In one example, the AC power is rectified using rectifier circuit 15 of FIG. 6 before reaching node 21.

Accordingly, implementing techniques of this disclosure, HARR charger power supplies can be utilized to convert a range of AC power to DC power without generating heat and incurring efficiency losses of traditional AC to DC converters. Using the HARR charger power supply as described herein, a range of AC frequencies can be converted to DC without incurring the efficiency loss a transformer would. Using the HARR charger power supply also allows the conversion of AC power over a range of input line voltages without trimming the output DC voltage and generating heat and efficiency losses. This allows the use of smaller and lighter power supplies because heavy transformers are not used. This also allows more efficient AC to DC power conversion in applications where the voltage and/or frequency of the AC power varies over a range.

**Discussion of Possible Embodiments**

The following are non-exclusive descriptions of possible embodiments of the present invention.

An AC to DC power supply can comprise a first node; a second node; a switch electrically coupled between the first node and the second node, the switch configured to receive AC power at the first node; a switch control circuit electrically coupled to the first node and the switch, the switch control circuit configured to open and close the switch based upon a voltage of the AC power at the first node; and a capacitive circuit electrically coupled to the second node, the capacitive circuit configured to store energy when the switch is closed and provide DC power when the switch is open.

The AC to DC power supply of the preceding paragraph can optionally include, additionally and/or alternatively, any one or more of the following features, configurations and/or additional components:

A rectifier circuit electrically coupled between the switch and the second node, the rectifier circuit configured to prevent current from flowing from the second node to the switch.

The rectifier circuit can comprise a diode.

An inductive circuit electrically coupled in series with the first node such that the first node is between the inductive circuit and the switch, the inductive circuit configured to provide energy to the capacitive circuit in response to the voltage of the AC power dropping while the switch is closed; and a rectifier circuit electrically coupled in series with the inductive circuit and the first node.

The rectifier circuit can comprise a full wave rectifier.

The switch control circuit can be configured to close the switch in response to the voltage of the AC power reaching a threshold voltage.

The switch control circuit can be configured to close the switch in response to the voltage of the AC power reaching a threshold voltage on a falling edge; and open the switch when the voltage of the AC power reaches zero volts on the falling edge.

An AC to DC power system can comprise an AC power source configured to provide AC power; an AC to DC power supply electrically coupled to the AC power source, the AC to DC power supply configured to receive the AC power, the AC to DC power supply comprising: a first node; a second node; a switch electrically coupled between the first node and the second node, the switch configured to receive the AC power at the first node; a switch control circuit electrically coupled to the first node and the switch, the switch control circuit configured to open and close the switch based upon a voltage of the AC power at the first node; and a capacitive circuit electrically coupled to the second node, the capacitive circuit configured to store energy when the switch is closed and provide DC power when the switch is open; and a load electrically coupled to the second node, the load configured to receive the DC power provided by the AC to DC power supply.

The AC to DC power system of the preceding paragraph can optionally include, additionally and/or alternatively, any one or more of the following features, configurations and/or additional components:

The AC to DC power supply can further comprise a rectifier circuit electrically coupled between the switch and the second node, the rectifier circuit configured to prevent current from flowing from the second node to the switch.

The rectifier circuit can comprise a diode.

The AC to DC power supply can further comprise an inductive circuit electrically coupled in series with the first node such that the first node is between the inductive circuit and the switch, the inductive circuit configured to provide energy to the capacitive circuit in response to the voltage of the AC power dropping while the switch is closed; and a rectifier circuit electrically coupled in series with the inductive circuit and the first node.

The rectifier circuit can comprise a full wave rectifier.

The switch control circuit can be configured to close the switch in response to the voltage of the AC power reaching a threshold voltage.

The switch control circuit can be configured to close the switch in response to the voltage of the AC power reaching a threshold voltage on a falling edge; and open the switch when the voltage of the AC power reaches zero volts on the falling edge.

A method can comprise receiving AC power, at a switch from an AC power source; monitoring a voltage of a node connected to a first terminal of the switch receiving the AC power using a switch control circuit; closing the switch for a time period in response to the voltage reaching a threshold voltage using the switch control circuit; charging a capacitive circuit connected to a second terminal of the switch in response to the switch closing for the time period; opening the switch in response to the time period elapsing using the switch control circuit; and providing power from the capacitor in response to the switch opening.

The method of the preceding paragraph can optionally include, additionally and/or alternatively, any one or more of the following features, configurations and/or additional components:

Closing the switch in response to the voltage reaching the threshold on a falling edge using the switch control circuit; and opening the switch in response to the voltage reaching zero volts using the switch control circuit.

Rectifying the AC power using a rectifier the rectifier electrically coupled between the AC power source and the node.

While the invention has been described with reference to an exemplary embodiment(s), it will be understood by those skilled in the art that various changes may be made and equivalents may be substituted for elements thereof without departing from the scope of the invention as defined by the claims. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

**Claims**

1. An AC to DC power supply comprising:

   a first node (21);
   a second node (25);
   a switch (22) electrically coupled between the first node and the second node, the switch configured to receive AC power at the first node;
   a switch control circuit (24) electrically coupled to the first node and the switch, the switch control circuit configured to open and close the switch based upon a voltage of the AC power at the first node; and
   a capacitive circuit (26) electrically coupled to the second node, the capacitive circuit configured to store energy when the switch is closed and provide DC power when the switch is open.

2. The AC to DC power supply of claim 1, wherein the switch control circuit (24) is configured to close the switch in response to the voltage of the AC power reaching a threshold voltage.

3. The AC to DC power supply of claim 1 or 2, wherein the switch control circuit (24) is further configured to open the switch after an elapsed time period following the switch is closed.

4. The AC to DC power supply of any preceding claim, further comprising a rectifier circuit (28) electrically coupled between the switch and the second node, the rectifier circuit configured to prevent current from flowing from the second node to the switch.

5. The AC to DC power supply of claim 4, wherein the rectifier circuit comprises a diode.

6. The AC to DC power supply of claim 5, wherein the switch control circuit is further configured to open the switch at a zero-current condition after the switch is closed.

7. The AC to DC power supply of any preceding claim, further comprising:

an inductive circuit (30) electrically coupled in series with the first node such that the first node is between the inductive circuit and the switch, the inductive circuit configured to provide energy to the capacitive circuit in response to the voltage of the AC power dropping while the switch is closed; and
a rectifier circuit electrically coupled in series with the inductive circuit and the first node.

8. The AC to DC power supply of claim 7, wherein the rectifier circuit comprises a full wave rectifier.

9. The AC to DC power supply of claim 7, wherein the rectifier circuit comprises a diode.

10. The AC to DC power supply of claim 7, wherein the switch control circuit is configured to:

close the switch in response to the voltage of the AC power reaching a threshold voltage on a falling edge; and
open the switch when the voltage of the AC power reaches zero volts on the falling edge.

11. A method comprising:

receiving AC power, at a switch from an AC power source;
monitoring a voltage of a node connected to a first terminal of the switch receiving the AC power using a switch control circuit;
opening and closing, via the switch control circuit, the switch based upon a voltage of the AC power at the first terminal;
charging a capacitive circuit connected to a second terminal of the switch in response to the switch being closed.

12. The method of claim 11, wherein the closing the switch is in response to the voltage of the received AC power reaching a threshold voltage.

13. The method of claim 11, wherein opening the switch is in response to a time period elapsing following the closing of the switch.

14. The method of claim 11, further comprising:
preventing, via a rectifier circuit, current from flowing from the second node to the switch.

15. The method of claim 11, wherein the rectifier circuit comprises a diode.

FIG. 1

FIG. 2

FIG. 3

FIG. 4

FIG. 5

FIG. 6

EP 3 525 334 A1

FIG. 7

EP 3 525 334 A1

46

48

RECEIVE AC POWER

50

MONITOR VOLTAGE

52

CLOSE A SWITCH

54

CHARGE A CAPACITOR

56

OPEN THE SWITCH

58

PROVIDE POWER FROM THE CAPACITOR

FIG. 8

Europäisches
Patentamt

European
Patent Office

Office européen
des brevets

# EUROPEAN SEARCH REPORT

Application Number

EP 19 15 6462

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 641 233 A (ROY RICHARD D [US]) 3 February 1987 (1987-02-03) * column 3, lines 45-54 * * figures 1-4 * * column 1, lines 7-12 * ----- | 1-15 | INV. H02M7/217 G05F1/56 |

TECHNICAL FIELDS
SEARCHED      (IPC)

H02M
G05F

The present search report has been drawn up for all claims

| Place of search | Date of completion of the search | Examiner |
|---|---|---|
| The Hague | 21 May 2019 | Fachado Romano, A |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 19 15 6462

This annex lists the patent family members relating to the patent documents cited in the above-mentioned European search report.
The members are as contained in the European Patent Office EDP file on
The European Patent Office is in no way liable for these particulars which are merely given for the purpose of information.

21-05-2019

| Patent document cited in search report | | Publication date | Patent family member(s) | Publication date |
|---|---|---|---|---|
| US 4641233 | A | 03-02-1987 | NONE | |

For more details about this annex : see Official Journal of the European Patent Office, No. 12/82

EPO FORM P0459